# EUROPÄISCHE PATENTSCHRIFT

(11) **EP 2 181 557 B1**
(45) Veröffentlichungstag und Bekanntmachung des Hinweises auf die Patenterteilung: **27.04.2011**
(21) Anmeldenummer: 08785462.6
(22) Anmeldetag: 08.08.2008
(51) Int. Cl.: H04W 24/06

(54) **VERFAHREN ZUM TESTEN DER ZUWEISUNG EINER ÜBERTRAGUNGSFREQUENZ, TESTGERÄT UND BASISSTATION**
METHOD FOR TESTING THE ALLOCATION OF A TRANSMISSION FREQUENCY, TESTER AND BASE STATION
PROCÉDÉ POUR TESTER L'ATTRIBUTION D'UNE FRÉQUENCE DE TRANSMISSION, APPAREIL D'ESSAI ET STATION DE BASE

(30) Priorität: 20.08.2007 DE 102007039174
(43) Veröffentlichungstag der Anmeldung: 05.05.2010
(73) Patentinhaber: Rohde & Schwarz GmbH & Co. KG, 81671 München (DE)
(72) Erfinder: BÄDER, Uwe, 85521 Ottobrunn (DE)
(74) Vertreter: Beder, Jens
(86) Internationale Anmeldenummer: PCT/EP2008/006568
(87) Internationale Veröffentlichungsnummer: WO 2009/024270

(56) Entgegenhaltungen:
- US-A1- 2006 120 395
- US-A1- 2006 217 073
- ANONYMOUS ED - ANONYMOUS: "IEEE standard for conformance to IEEE 802.16. Part 3: radio conformance tests (RCT) for 10-66 GHz WirelessMAN-SC air interface" IEEE STANDARD; [IEEE STANDARD], IEEE, PISCATAWAY, NJ, USA, 25. Juni 2004 (2004-06-25), XP017600971 ISBN: 978-0-7381-4058-2

## Beschreibung

Die Erfindung betrifft ein Verfahren zum Testen einer Zuweisung einer oder mehrerer Übertragungsfrequenzen aus einer Gesamtzahl von Übertragungsfrequenzen durch eine Basisstation, ein Testgerät und eine entsprechende Basisstation.

Moderne Funkübertragungsverfahren wie beispielsweise OFDMA (orthogonal frequency division multiple access) nutzen eine Mehrzahl von möglichen Übertragungsfrequenzen. Um eine jeweils qualitativ bestmögliche Verbindung zu erreichen bzw. die bestmögliche Ausnutzung der zur Verfügung stehenden Gesamtbandbreite zu ermöglichen, wird durch eine Basisstation dem teilnehmenden Endgerät eine Übertragungsfrequenz oder ein Frequenzblock, der mehrere Übertragungsfrequenzen aufweist, zugewiesen. Zur Zuweisung dieser Übertragungsfrequenzen wird die Qualität der Übertragung für die einzelnen Übertragungsfrequenzen analysiert, z.B. hinsichtlich einer Phasenlage oder Signalleistung. Abhängig vom Ergebnis dieser Analyse und unter Berücksichtigung weiterer Randbedingungen, beispielsweise bereits vergebene Frequenzen oder Überlagerung von Signalen auf möglichen Übertragungsfrequenzen einer Nachbarzelle, wird eine oder mehrere der möglichen Übertragungsfrequenzen ausgewählt und dem mit der Basisstation verbundenen Endgerät zugewiesen. Dieses Endgerät sendet dann zu übermittelnde Daten auf der zugewiesenen Übertragungsfrequenz.

Die US Patentanmeldung US2006/0120395 A1 veröffentlicht ein Verfahren und ein Gerät, um eine Mehrzahl von Antennen und Übertragungsfrequenzen in einem Kommunikationssystem der Kommunikation mit einem Endgerät zuzuweisen. Eigenschaften, die die Übertragungsqualität von Kanälen im Downlink und Uplink kennzeichnen, werden zunächst in Endgeräten und/oder der Basisstation ermittelt. Die Basisstation bestimmt dann aufgrund der ermittelten Eigenschaften, der von Endgeräten übermittelten Kanalqualität und unter Berücksichtigung weiterer Parameter eine geeignete Übertragungsfrequenz und weist diese Übertragungsfrequenz der Kommunikation mit dem Endgerät zu. Die in die Entscheidung zur Zuweisung einfließenden weiteren Parameter sind beispielsweise die Verfügbarkeit bestimmter Übertragungsfrequenzen für bestimmte Funkzellen und Belegung bestimmter Übertragungsfrequenzen durch weitere Endgeräte.

Aufgabe des vorliegenden Verfahrens ist es, eine Möglichkeit zu schaffen, die Zuweisung einer Frequenz oder eines Frequenzblocks zu dem teilnehmenden Endgerät durch die Basisstation überprüfen zu können. Die Aufgabe wird durch das erfindungsgemäße Verfahren mit den Merkmalen des Anspruchs 1, das erfindungsgemäße Testgerät mit den Merkmalen des Anspruchs 9 und die Basisstation gemäß Anspruch 12 gelöst.

Bei dem erfindungsgemäßen Verfahren zum Testen der Zuweisung einer oder mehrerer Übertragungsfrequenzen aus einer Gesamtzahl von theoretisch verfügbaren Übertragungsfrequenzen durch die Basisstation wird zunächst eine Funkverbindung zwischen einem Testgerät und einer Basisstation aufgebaut. Mit dieser Funkverbindung werden auf zumindest einer zugewiesenen Übertragungsfrequenz Datensignalabschnitte durch das Testgerät mit einer bestimmten Signalleistung und einer Phasenlage übermittelt. Die einzustellende Phasenlage und die Signalleistung werden wie im Übertragungsstandard festgelegt eingestellt. Im Falle des beispielhaft zu nennenden OFDMA-Übertragungsverfahrens entsprechen jeder dieser Datensignalabschnitte jeweils einem Zeitschlitz der Rahmenstruktur des zu sendenden Signals. Zusätzlich zu den Datensignalabschnitten werden Testsignalabschnitte durch das Testgerät an die Basisstation übertragen. Ein Testsignalabschnitt entspricht ebenfalls einem Zeitschlitz. Die Testsignalabschnitte werden auf zumindest einer nicht zur Datenübertragung vorgesehenen und zugewiesenen Übertragungsfrequenz an die Basisstation übermittelt. Dabei wird jedem Testsignalabschnitt, der durch das Testgerät gesendet wird, für jede in dem Testsignalabschnitt verwendete Übertragungsfrequenz bzw. einen dort vorgesehenen Frequenzblock mit eine individuell eingestellte Sendeleistung und eine Phasenlage zugeordnet. Dieser Testsignalabschnitt oder mehrere nacheinander durch das Testgerät gesendete Testsignalabschnitte werden durch die Basisstation empfangen. Die Signalleistungen und Phasenlager der Testsignalabschnitte werden einzeln für die Übertragungsfrequenzen und/oder Frequenzblöcke ausgewertet des Testsignals. Zudem werden die Signalleistung und/oder die Phasenlage für die zugewiesene Übertragungsfrequenz ausgewertet. Dies kann durch Analyse der Datensignalabschnitte erfolgen, oder durch Senden des Testsignalabschnitts auch auf der zugewiesenen Übertragungsfrequenz mit anschließender Auswertung nur des Testsignalabschnitts oder mehrerer Testsignalabschnitte. Auf Basis dieser ausgewerteten Signalleistungen und/oder Phasenlagen wird eine zur Verbindung zwischen der Basisstation und dem teilnehmenden Endgerät zu verwendende und damit zuzuweisende Übertragungsfrequenz oder ein Frequenzblock ermittelt.

Durch die Basisstation wird ein Zuweisungssignal erzeugt und zurückgesendet. Dieses Zuweisungssignal enthält die Information über die nachfolgend zu verwendende Übertragungsfrequenz und wird durch das Testgerät empfangen. Das Zuweisungssignal bzw. dessen Inhalt wird mit einem den individuell eingestellten Sendeleistungen und/oder Phasenlagen der einzelnen Übertragungsfrequenzen oder Frequenzblöcke entsprechenden Erwartungswert verglichen. Der Erwartungswert wird bei Erzeugen der Testsignalabschnitte in dem Testgerät ermittelt und gibt an, welche Übertragungsfrequenz bei korrekter Auswertung durch die Basisstation ermittelt werden müsste.

Das Testgerät weist zum Durchführen des erfindungsgemäßen Verfahrens einen Signalerzeugungsabschnitt auf, mit dem ein Signal erzeugt wird, welches zumindest einen Datensignalabschnitt und zumindest einen Testsignalabschnitt aufweist. Dabei werden durch eine Sendeeinrichtung der Datensignalabschnitt auf einer zugewiesenen Übertragungsfrequenz und der Testsignalabschnitt auf zumindest einer nicht zugewiesenen Übertragungsfrequenz gesendet. Die Zuordnung des Datensignalabschnitts zu der zugewiesenen Frequenz und die Zuordnung des Testsignalabschnitts zumindest zu mindestens einer nicht zugewiesenen Übertragungsfrequenz erfolgt ebenfalls durch den Signalerzeugungsabschnitt. Ferner weist das Testgerät eine Empfangseinrichtung zum Empfangen eines Zuweisungssignals und eine Vergleichseinrichtung zum Vergleichen des Inhalts des empfangenen Zuweisungssignals mit einem Erwartungswert auf. Die Sendeeinrichtung ist so eingerichtet, dass in den gesendeten Signalen jeder Übertragungsfrequenz und/oder jedem Frequenzblock mit mehreren Übertragungsfrequenzen individuell eine Signalleistung und/oder eine Phasenlage zugewiesen werden kann und das Sendesignal entsprechend ausgegeben wird.

Weiterhin ist in der Basisstation eine Empfangseinrichtung, eine Auswerteeinrichtung, ein Zuweisungssignalerzeugungsabschnitt und eine Auswerteeinrichtung vorgesehen. Die Auswerteeinrichtung ist mit einem Betriebsmodusauswahlabschnitt verbunden, wobei die Auswerteeinrichtung so eingerichtet ist, dass in Abhängigkeit von einem Auswahlsignal des Betriebsmodusauswahlabschnitts zur Ermittlung der zuzuweisenden Übertragungsfrequenz bzw. des zuzuweisenden Frequenzblocks jeweils nur diejenigen aus dem von dem Testgerät empfangenen Signal ermittelten Parameter zu Grunde gelegt werden.

In den Unteransprüchen sind vorteilhafte Weiterbildungen des erfindungsgemäßen Verfahrens sowie des erfindungsgemäßen Testgeräts ausgeführt.

Insbesondere ist es vorteilhaft, zum Senden ein Signal mit einer Rahmenstruktur zu erzeugen, das mehrere aufeinanderfolgende Zeitschlitze aufweist, wobei in aufeinanderfolgenden Rahmen des Signals jeweils der selbe Zeitschlitz zum Senden jeweils eines Testsignalabschnitts verwendet wird. Der Testsignalabschnitt kann auf mehreren Frequenzblöcken und/oder Übertragungsfrequenzen einschließlich der zugewiesenen Übertragungsfrequenz gesendet werden, wobei mehrere Übertragungsfrequenzen jeweils zu einem Frequenzblock zusammengefasst werden. Dabei kann insbesondere die Anzahl von Frequenzblöcken des Testsignalabschnitts in aufeinanderfolgenden Rahmen variiert werden. Einerseits ist es damit möglich, durch die aufeinanderfolgenden Testsignalabschnitte aufeinanderfolgender Rahmen die Gesamtbandbreite abzudecken und andererseits ist es auch möglich, gezielt jeweils nur beispielsweise einen Frequenzblock für die Überprüfung der Zuweisungsfunktion der Basisstation zu verwenden. Insbesondere kann damit auch die Belastung der Basisstation eingestellt werden, indem in unterschiedlichen Rahmen eine unterschiedliche Anzahl von Frequenzblöcken oder nicht zugewiesenen Übertragungsfrequenzen in dem Testsignalabschnitt enthalten sind. So ist eine Auswertung für die Basisstation, bei der die Gesamtbandbreite in dem Testsignalabschnitt enthalten ist, umfangreicher, als wenn lediglich ein Frequenzblock oder gar eine einzelne nicht zugewiesene Übertragungsfrequenz verwendet wird.

Weiterhin ist es bevorzugt, in der Basisstation weitere das Zuweisungssignal beeinflussende Parameter zu unterdrücken, sodass das Zuweisungssignal durch die Basisstation allein auf Basis des von dem Testgerät gesendeten Signals ermittelt wird. Solche weiteren Parameter sind beispielsweise bereits belegte Übertragungsfrequenzen, auf denen eine Funkverbindung zwischen der Basisstation und anderen Netzteilnehmern aufgebaut ist. Diese Übertragungsfrequenzen sind im realen Betrieb nicht verfügbar. Stellt die Basisstation während eines regulären Betriebs fest, dass eine solche Frequenz zuzuweisen wäre, so würde das Zuweisungssignal dennoch eine andere Frequenz zuweisen. Eine solche alternative Zuweisung verschlechtert jedoch das Analyseergebnis, da keine Übereinstimmung mit dem Erwartungswert möglich ist. Die Basisstation weist daher einen Betriebsmodusausfallabschnitt auf, durch den die Auswerteeinrichtung ansteuerbar ist. Der Auswerteinrichtung wird ein Auswahlsignal des Betriebsmodusauswahlabschnitts zugeführt, woraufhin die Auswerteeinrichtung weitere Parameter, die das Zuweisungssignal beeinflussen, unterdrückt. Solche weiteren Parameter können beispielsweise auch aus einer Tabelle stammen, in der die durch benachbarte Zellen belegten Übertragungsfrequenzen abgelegt sind.

Gemäß einer weiteren bevorzugten Ausführungsform wird durch Variation der den Frequenzblöcken bzw. Übertragungsfrequenzen zugeordneten Signalleistungen und/oder Phasenlagen ermittelt, ab welcher minimalen Abweichung von der Signalleistung und/oder der Phasenlage der zugewiesenen Übertragungsfrequenz ein Wechsel der zugewiesenen Übertragungsfrequenz erfolgt. Die Übertragung von Daten zwischen der Basisstation und einem Teilnehmer, und damit auch mit dem Testgerät, verwendet so lange eine einmal zugewiesene Übertragungsfrequenz, bis ein Wechsel der Übertragungsfrequenz durch Zuweisen einer neuen Übertragungsfrequenz erfolgt. Durch Konstanthalten der Signalleistungen der Phasenlage für die zugewiesene Übertragungsfrequenz und gleichzeitig Variation der Signalleistung bzw. der Phasenlage der nicht zugewiesenen Übertragungsfrequenzen, lässt sich somit ein Wechselkriterium ermitteln. Dabei ist es insbesondere bevorzugt den aufeinanderfolgenden Testabschnitten für nur eine bestimmte Übertragungsfrequenz oder einen bestimmten Frequenzblock die Signalleistung schrittweise zu erhöhen oder die Phasenlage schrittweise zu ändern, bis durch die Basisstation diese bestimmte Übertragungsfrequenz bzw. der bestimmte Frequenzblock zugewiesen wird.

Das Testgerät weist vorzugsweise in einem Speicher abgespeichert zumindest ein Schema zur Auswahl der Übertragungsfrequenzen des Testsignalabschnitts auf. Somit kann durch einfaches Abrufen eines vordefinierten Schemas der Ablauf des Testverfahrens in einfacher Weise kontrolliert werden. Beispielsweise kann die Abfolge von Frequenzblöcken oder Übertragungsfrequenzen, die in aufeinanderfolgenden Testsignalabschnitten verwendet werden, ebenso vordefiniert in dem Speicher abgelegt sein, wie die Variation der Signalleistungen und/oder der Phasenlagen für die einzelnen Übertragungsfrequenzen bzw. Frequenzblöcke aufeinanderfolgender Rahmen.

Das Testgerät umfasst ferner eine Steuerungseinheit, durch die dem Testsignal für jeweils eine Übertragungsfrequenz bzw. einen Frequenzblock individuell eine Signalleistung und/oder eine Phasenlage zugeordnet wird. Die Steuerungseinheit kann dabei insbesondere so eingerichtet sein, dass sie bei einer Variation der Signalleistung bzw. der Phasenlage den Wechsel der zugewiesenen Übertragungsfrequenz erkennt und anschließend ein neues Schema aus dem Speicher des Testgeräts aufruft oder z.B. den Test abbricht und ein Ergebnis ausgibt.

Eine bevorzugte Ausführungsform der Erfindung wird anhand der Zeichnung in der nachfolgenden Beschreibung näher erläutert. Es zeigen:
- Fig. 1: ein Blockschaltbild eines Messsystems mit einem erfindungsgemäßen Testgerät und einer erfindungsgemäßen Basisstation;
- Fig. 2: eine schematische Darstellung eines von dem Testgerät gesendeten Signals zur Erläuterung des Ablaufs des erfindungsgemäßen Verfahrens;
- Fig. 3: eine zweite schematische Darstellung eines gesendeten Signals;
- Fig. 4: eine dritte schematische Darstellung eines gesendeten Signals; und
- Fig. 5: ein Verfahrensablauf zur Durchführung des erfindungsgemäßen Verfahrens zum Testen der Zuweisung einer Übertragungsfrequenz durch die Basisstation.

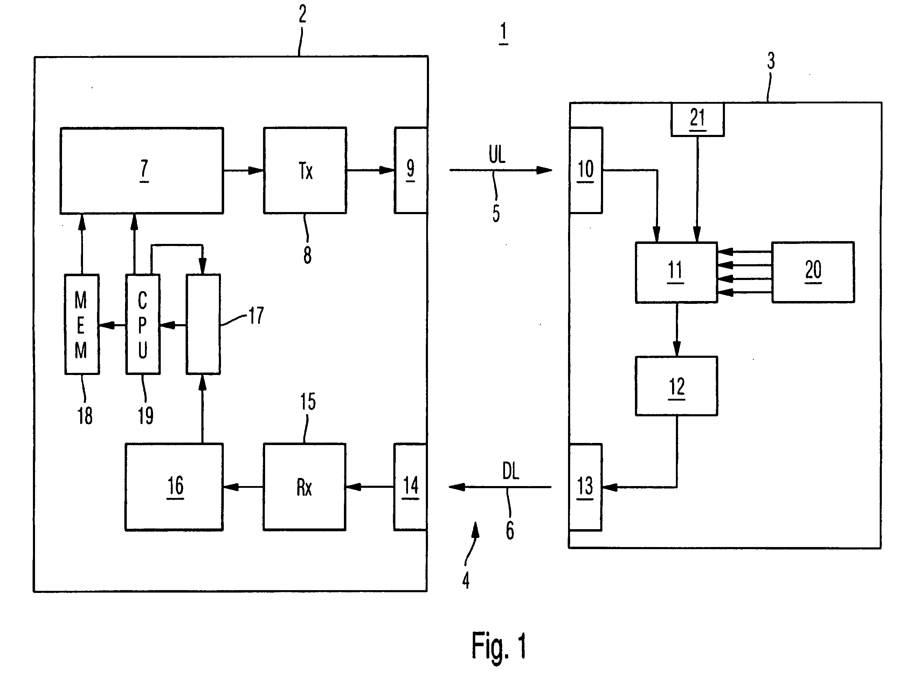

In der Fig. 1 ist schematisch ein Messsystem 1 dargestellt, welches ein Testgerät 2 und eine Basisstation 3 umfasst. Die Basisstation 3 und das Testgerät 2 sind über eine Funkverbindung 4 miteinander verbunden. Die Funkverbindung umfasst einen Uplink-Kanal 5 über den von dem Testgerät 2 gesendete Signale zu der Basisstation 3 hin übertragen werden. Umgekehrt ist ein Downlink-Kanal 6 der Funkverbindung 4 vorgesehen, mit dem von der Basisstation 3 an das Testgerät 2 Signale übermittelt werden.

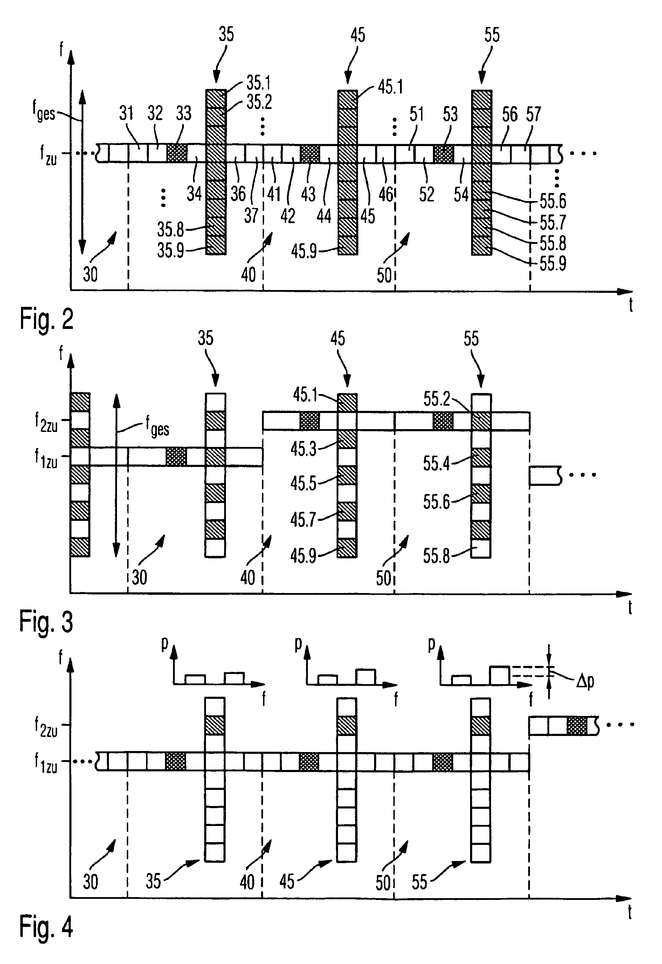

Das Testgerät 2 umfasst einen Signalerzeugungsabschnitt 7. Der Signalerzeugungsabschnitt 7 erzeugt ein zu sendendes Signal, welches nachfolgend unter Bezugnahme auf die Figuren 2-4 noch im Detail erläutert wird. Dieses durch den Signalerzeugungsabschnitt 7 erzeugte Signal wird mittels einer Sendeeinrichtung 8 und einer Schnittstelle 9 ausgegeben. Dabei ist jeweils einer Übertragungsfrequenz des Signals individuell eine Sendeleistung und eine Phasenlage zugeordnet. Die Sendeeinrichtung 8 ist dabei so eingerichtet, dass sie gemäß diesen Vorgaben für jede in dem erzeugten Signal vorhandene Übertragungsfrequenz individuell eine Signalleistung und eine Phasenlage erzeugen kann. Damit wird ein Signal über die Schnittstelle 9 an die Basisstation 3 übertragen, welche beispielsweise ein über die Gesamtbandbreite vorgegebenes Leistungsprofil aufweist.

Das von dem Testgerät 2 auf diese Weise gesendete Signal wird an einer Empfangsschnittestelle 10 der Basisstation 3 empfangen. Das dort empfangene Signal wird einer Auswerteeinheit 11 zugeführt. Die Auswerteeinheit 11 ermittelt für jede der in dem Signal enthaltenen Übertragungsfrequenzen oder Frequenzblöcke, die mehrere Übertragungsfrequenzen beinhalten können, eine Signalleistung und eine Phasenlage. Die qualitativ hochwertigste Übertragungsfrequenz bzw. der Frequenzblock mit der besten Qualität wird so in der Auswerteeinheit 11 ermittelt. Auf Basis dieser ermittelten bestmöglichen Übertragungsfrequenz bzw. des Frequenzblocks wird durch die Zuweisüngssignalerzeugungseinrichtung 12 ein Zuweisungssignal erzeugt, das über die Sendeschnittstelle 13 der Basisstation 3 und den Downlink-Kanal 6 zurück an das Testgerät 2 gesendet wird. In dem Testgerät 2 ist eine zweite Schnittstelle 14 ausgebildet, die einer Empfangseinrichtung 15 das empfangene Zuweisungssignal zuführt. Das Zuweisungssignal wird in einer Auswerteeinrichtung 16 ausgewertet und der Inhalt des Zuweisungssignals ermittelt. Auf Basis des ermittelten Inhalts des Zuweisungssignals wird in einem Vergleicher 17 ermittelt, ob die tatsächlich durch die Basisstation 3 zugewiesene Übertragungsfrequenz mit der auf Grund des erzeugten und durch das Testgerät 2 gesendeten Signals erwarteten Übertragungsfrequenz übereinstimmt. Hierzu wird durch eine Steuerungseinheit 19 ein Erwartungswert für die Zuweisung ermittelt, der für die im Idealfall korrekter Analyse seitens der Basisstation 3 zuzuweisende Übertragungsfrequenz steht. Auf Basis der den einzelnen Übertragungsfrequenzen bzw. Frequenzblöcken zugewiesenen Signalleistungen und der Phasenlagen ermittelt die Steuerungseinheit, welche Übertragungsfrequenz durch die Basisstation 3 bei idealer Auswertung zugewiesen werden müsste. Dieser Erwartungswert wird durch die Steuerungseinheit 19 an den Vergleicher 17 übermittelt. Der Vergleicher 17 vergleicht den Erwartungswert mit der aus dem Inhalt des Zuweisungssignals tatsächlich ermittelten Übertragungsfrequenz. Das Ergebnis des Vergleichs wird wiederum der Steuerungseinheit 19 zugeführt. Die Steuerungseinheit 19 kann beispielsweise in nicht dargestellter Weise mit einem Bildschirm zur Ausgabe des Ergebnisses verbunden sein.

Ferner ist die Steuerungseinheit 19 mit einem Speicher 18 verbunden. Im Speicher 18 können mehrere unterschiedliche Schemata abgespeichert sein, in denen die Auswahl von Überträgungsfrequenzen bzw. Frequenzblöcke mit mehreren Übertragungsfrequenzen für die einzelnen Testsignalabschnitte abgelegt sind. Ein Schema kann dabei einerseits die reine Auswahl der Übertragungsfrequenzen für jeden Testsignalabschnitt umfassen und andererseits gleichzeitig eine Zuweisung einer bestimmten Signalleistung zu einer Übertragungsfrequenz beinhalten. Für die Zuweisung der Signalleistung bzw. der Phasenlage zu den Übertragungsfrequenzen können auch zusätzliche Schemata in dem Speicher abgelegt sein. Diese werden dann durch die Steuerungseinheit 19 aufgerufen und an die Signalerzeugungseinrichtung 7 weitergeleitet. Dort findet die Zuordnung zwischen einer Übertragungsfrequenz und der jeweils vorgesehenen Signalleistung und/oder Phasenlage statt.

Sämtliche Ausführungen bezüglich der Übertragungsfrequenzen treffen sinngemäß auch auf die Frequenzblöcke zu, sofern nichts anderes angegeben ist.

Die Basisstation 3 weist für den normalen Betrieb zum Aufbau einer Funkverbindung mit mehreren Teilnehmern zudem eine Quelle 20 für weitere Parameter auf. Diese weiteren Parameter werden von der Auswerteeinrichtung 11 im realen Betrieb berücksichtigt, um z.B. Doppelbelegungen von Übertragungsfrequenzen zu verhindern. Solche Parameter sind beispielsweise bereits durch andere Teilnehmer bzw. Verbindungen zu anderen Teilnehmern belegte Frequenzen. Ferner kann die Quelle 20 eine Tabelle beinhalten, in der durch Nachbarzellen z.B. in einem zellulären Mobilfunknetz, verwendete Übertragungsfrequenzen abgelegt sind. Diese Parameter werden der Auswerteeinrichtung 11 in einem normalen Betriebsmodus zugeführt. Die Auswerteeinheit 11 berücksichtigt diese Parameter und ermittelt somit unter Zugrundelegen der noch frei verfügbaren Übertragungsfrequenzen sowie dem aus dem vom Testgerät 2-empfangenen Signal, welche der frei verfügbaren Übertragungsfrequenzen dem Testgerät 2 zugewiesen werden soll. Um jedoch eine unbeeinflusste Messung durchführen zu können, weist die Basisstation 3 ferner einen Betriebsmodusauswahlabschnitt 21 auf. Über den Betr.iebsmodusauswahlabschnitt 21, der mit der Auswerteeinrichtung 11 verbunden ist, wird die Auswerteeinrichtung 11 in einen Testmodus geschaltet, bei dem die durch die Quelle 20 zugeführten Parameter unterdrückt werden. Eine solche Unterdrückung kann beispielsweise durch Überspringen bestimmter Schritte in einem Algorithmus der Auswerteeinheit 11 erfolgen. Alternativ können auch die entsprechenden Eingänge zum Einlesen der Parameter aus der Quelle 20 der Auswerteeinrichtung 11 mit Default-Werten belegt werden.

Zur Erläuterung war vorstehend von einer Funkverbindung 4 ausgegangen worden. Zu Testzwecken kann anstelle einer Funkverbindung auch eine kabelgebundene Verbindung verwendet werden. Umgebungseinflüsse wie unerwünschte Dämpfung können so besser kontrolliert oder ausgeschlossen werden.

In der Fig. 2 ist ein erstes Beispiel zur Erläuterung eines durch das Testgerät 2 erzeugten Signals dargestellt. Ein durch das Testgerät 2 erzeugtes Signal weist aufeinanderfolgende Rahmen 30, 40 und 50 auf. In dem dargestellten Aufführungsbeispiel und ohne Beschränkung der erfindungsgemäßen Lehre weißt jeder der aufeinanderfolgenden Rahmen 30, 40, 50 sieben Zeitschlitze 31-37, 41-47 und 51-57 auf. Jeder dieser Zeitschlitze entspricht einem Signalabschnitt. Während die ersten vier Signalabschnitte 31-34, 41-44 und 51-54 jeweils als Datensignalabschnitte ausgebildet sind, wird der jeweils fünfte Zeitschlitz der Rahmen als Testsignalabschnitt 35, 45 bzw. 55 vorgesehen.

Die Datensignalabschnitte 31-34, 36, 37, 41-42, ... werden jeweils auf einer durch die Basisstation 3 zugewiesenen Frequenz f_{zu} gesendet. Die Testsignalabschnitte 35, 45 und 55 werden dagegen über die gesamte verfügbare Bandbreite f_{gesamt} gesendet. Die gesamte Bandbreite, mit der die Testsignalabschnitte 35, 45 und 55 gesendet werden, sind in jeweils beispielhaft neun Frequenzblöcke 35.1-35.9, 45.1-45.9 und 55.1-55.9 unterteilt. Dabei kann jeder der Frequenzblöcke 35.i, 45.i und 55.i wiederum eine Mehrzahl von Übertragungsfrequenzen (Subträgerfrequenzen) beinhalten.

Beim Senden des Testsignalabschnitts 35 wird jedem der Frequenzblöcke 35.i eine bestimmte Signalleistung zugeordnet, mit der der Testsignalabschnitt auf dieser Frequenz gesendet wird. Diese Signalleistungen unterscheiden sich zumindest teilweise für die einzelnen Frequenzblöcke, um eine Auswertung durch die Auswerteeinrichtung 11 überhaupt erst möglich zu machen. In Abhängigkeit von dieser individuell den Frequenzblöcken 35.i und damit den Übertragungsfrequenzen zugeordneten Signalleistungen wird die optimale Frequenz für eine Verbindung auf der Seite der Basisstation 3 ermittelt.

Die Zuweisung von unterschiedlichen Signalleistungen zu den einzelnen Frequenzblöcken 35.i bzw. Übertragungsfrequenzen kann beispielsweise durch frequenzselektives Fading durchgeführt werden, das in der Sendeeinrichtung 8 erzeugt wird.

Das in der Fig. 2 dargestellte Ausführungsbeispiel sendet in jedem der Testsignalabschnitte 35, 45 und 55 der aufeinanderfolgenden Rahmen 30, 40, 50 über jeweils die gesamte Bandbreite f_{ges}. Somit ist nach jeweils einem Rahmen 30, 40 und 50 bereits das gesamte zur Verfügung stehende Frequenzband abgedeckt und durch die Basisstation 3 kann in der Auswerteeinrichtung 11 nach jeweils eineim Rahmen 30, 40 oder 50 eine zuzuweisende Frequenz ermittelt werden.

In der Fig. 2 ist es ferner dargestellt, dass der jeweils dritte Zeitschlitz der Rahmen 30, 40, 50 und somit die Datensignalabschnitte 33, 43, 53 ein sogenanntes Uplink-Reference-Signal für die Demodulation in dem mit der Basisstation 3 verbundenen Gerät bilden. Mit Hilfe eines solchen Pilotsignals werden für die Verbindung relevante Daten an das jeweils mit der Basisstation 3 verbundene Endgerät übermittelt.

Die Fig. 3 zeigt ein zweites Ausführungsbeispiel eines Signals zu Durchführung des erfindungsgemäßen Verfahrens. Der besseren Übersichtlichkeit wegen sind nur noch die jeweils relevanten Frequenzblöcke bzw. Datensignalabschnitte mit Bezugszeichen versehen. Zunächst werden die Datensignalabschnitte des ersten Rahmens 30 bzw. des dem ersten Rahmen 30 vorangegangenen Rahmens auf einer erst zugewiesenen Frequenz f_{1zu} gesendet. Nach dem Empfangen des Testsignalabschnitts 35 wird durch die Basisstation 3 eine neue Frequenz f_{2zu} zugewiesen. Die Datensignalabschnitte 41ff werden dann durch das Testgerät auf dieser neu zugewiesenen Übertragungsfrequenz f_{2zu} übermittelt. Davon unabhängig wird das durch die Steuereinrichtung 19 bestimmte Schema zur Auswahl der Frequenzblöcke für den jeweils zu sendenden Testsignalabschnitt beibehalten. Es ist zu erkennen, dass in dem Testsignalabschnitt 35 des ersten Rahmens 30 diejenigen Frequenzblöcke enthalten sind, die in dem Testsignalabschnitt des vorangegangenen Rahmens ausgespart waren. In zwei aufeinanderfolgenden Rahmen werden also sämtliche Frequenzblöcke der gesamten Frequenzbandbreite f_{ges} durch die Testsignalabschnitte verwendet. Nachdem der Basisstation 3 so für das gesamte zur Verfügung stehende Frequenzband f_{ges} jeweils ein Frequenzblock mit einer individuell zugeordneten Signalleistung und einer individuell zugeordneten Phasenlage übermittelt wurde, kann eine Auswertung durch die Basisstation 3 bzw. deren Auswerteeinrichtung 11 vorgenommen werden. Ein Wechsel einer Übertragungsfrequenz und damit das Zuordnen einer neuen Übertragungsfrequenz kann somit alle zwei Rahmen erfolgen. Für die Rahmen 40 und 50 ist dies wiederum dargestellt. Während in dem zweiten Rahmen 40 in dem Testsignalabschnitt 45 die Frequenzblöcke 45.1, 45.3, 45.5, 45.7 und 45.9 mit einer jeweils individuell zugeordneten Signalleistung und Phasenlage gesendet werden, werden in den darauffolgenden Rahmen 50 die übrigen zur Gesamtbandbreite noch fehlenden Frequenzblöcke 45.2, 45.4, 45.6 und 45.8 gesendet. Damit steht nach den beiden Rahmen 40 und 50 der Basisstation 3 wiederum für die Gesamtbandbreite die erforderliche Information hinsichtlich der Leistung und Phasenlage zur Verfügung.

In der Fig. 4 ist es gezeigt, dass nicht nur die korrekte Zuweisung einer Übertragungsfrequenz in Abhängigkeit von den Signalleistungen bzw. Phasenlagen ermittelt werden kann, sondern dass auch ein Schwellwert bzw. Grenzwert ermittelt werden kann, ab dem ein Wechsel der zugewiesenen Übertragungsfrequenz erfolgt.

In der Fig. 4 ist es hierzu dargestellt, dass die Datenübertragung zwischen der Basisstation 3 und dem Testgerät 3 auf einer ersten zugewiesenen Frequenz f_{1zu} durchgeführt wird. Die Leistung zur Übertragung auf der zugewiesenen Übertragungsfrequenz wird ebenso konstant gehalten wie die Phasenlage. Dem gegenüber wird eine Variation der Signalleistung bzw. der Phasenlage für zumindest einen der Frequenzblöcke der Testsignalabschnitte 35, 45 oder 55 durchgeführt. Im dargestellten Ausführungsbeispiel wird jeweils der zweite Frequenzblock 35.2, 45.2 und 55.2 zur Ermittlung des minimalen Abstands der Signalleistung und/oder der Phasenlage von der Signalleistung bzw. der Phasenlage der zugewiesenen Übertragunsgfrequenz verwendet. Wie es oberhalb des jeweiligen Testsignalabschnitts 35, 45 und 55 dargestellt ist, wird für die Frequenz f_{2zu} die Signalleistung schrittweise erhöht. Durch das schrittweise Erhöhen der Signalleistung kann diejenige Signalleistung ΔP ermittelt werden, bei der die neue Frequenz F_{2zu} durch Übermittlung eines entsprechenden Zuweisungssignals durch die Basisstation 3 zugewiesen wird.

In der Fig. 4 ist es dargestellt, dass nur ein Frequenzblock 35.2, 45.2, 55.2 in jeden Testsignalabschnitt 35,45 und 55 hierzu verwendet wird. Es ist jedoch selbstverständlich auch möglich, komplexere Schemata zur Durchführung des Tests bezüglich der Zuweisung einer Übertragungsfrequenz zu verwenden. Insbesondere können beliebige Leistungsprofile für die einzelnen Übertragungsfrequenzen beziehungsweise Frequenzblöcke innerhalb jeweils eines Testsignalabschnitts verwendet werden, wobei in aufeinanderfolgendem Rahmen ein Teil oder alle der zugewiesenen Signalleistungen variiert werden können.

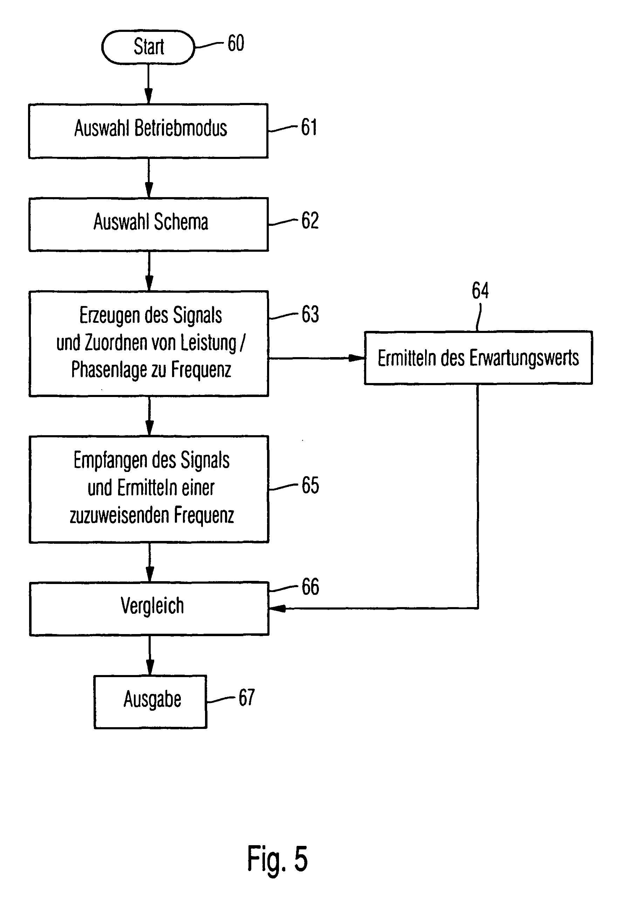

In der Fig. 5 ist noch einmal in einem vereinfachten Schema die Durchführung des erfindungsgemäßen Verfahrens dargestellt. Zunächst wird das Testverfahren in Schritt 60 gestartet. Vor dem Senden von Datensignalabschnitten und Testsignalabschnitten mit individuell jeder Übertragungsfrequenz oder jedem Frequenzblock zugewiesener Signalleistung wird der Betriebsmodus der Basisstation ausgewählt. In Abhängigkeit von dem Auswahlsignal wird die Auswerteeinrichtung in den Testbetriebsmodus geschaltet, bei dem weitere Parameter unterdrückt werden (Schritt 61). Anschließend wird in Schritt 62 ausgewählt, welche Konfiguration die Testsignalabschnitte aufweisen sollen. Hierzu wird ein Schema aus dem Speicher 18 durch den Signalerzeugungsabschnitt 7 eingelesen. Dieses Schema kann entweder nur die jeweils in aufeinanderfolgenden Testsignalabschnitten verwendeten Frequenzblöcke aufweisen oder aber bereits für die aufeinanderfolgenden Testsignalabschnitte auch die individuell zugeordneten Signalleistungen oder Phasenlagen beinhalten. Ein solches Schema kann beispielsweise in Form einer Tabelle in dem Speicher 18 abgelegt sein.

Nach der Auswahl des Schemas wird in Schritt 63 ein entsprechendes Sendesignal erzeugt, dass aus Datensignalabschnitten und Testsignalabschnitten besteht. Das Signal umfasst mehrere aufeinanderfolgende Rahmen, wobei dem Testsignalabschnitt ebenso wie den Datensignalabschnitten für die jeweils verwendeten Übertragungsfrequenzen eine Signalleistung- und eine Phasenlage zugeordnet ist. Aus dieser Information, also den verwendeten Frequenzen für die Datensignalabschnitte und die Testsignalabschnitte, sowie die zugeordnete Signalleistung und Phasenlage wird in Schritt 64 ein Erwartungswert ermittelt. Der Erwartungswert gibt an, welche Übertragungsfrequenz dem Testgerät durch die Basisstation 3 nachfolgend zugewiesen werden müsste. Der Erwartungswert kann auch lauten, dass ein Wechsel der momentan verwendeten Übertragungsfrequenz nicht erfolgen soll.

Das Sendesignal wird anschließend durch das Testgerät 2 ausgesendet und in Schritt 35 durch die Basisstation empfangen. Dort wird in der Auswerteeinrichtung 11 eine zuzuweisende Frequenz ermittelt. War vorher durch den Betriebsmodulauswahlabschnitt 21 bereits vorgegeben worden, dass weitere Parameter ignoriert werden sollen, so wird diese zuzuweisende Frequenz ausschließlich aus den Informationen ermittelt, die in dem im Uplink-Kanal 5 übermittelten Datensignalabschnitten und Testsignalabschnitten enthalten sind. Durch die Basisstation 3 wird ein Zuweisungssignal erzeugt und im Downlink-Kanal 6 zurückgesendet. Der Inhalt des Zuweisungssignals wird mit dem Erwartungswert in Schritt 66 verglichen und das Ergebnis der Auswertung in Schritt 67 ausgegeben. Eine solche Auswertung kann beispielsweise die Gegenüberstellung von richtig getroffenen Zuweisungen und fehlerhaften Zuweisungen durch die Basisstation 3 umfassen.

Das erfindungsgemäße Verfahren ist nicht auf das dargestellte Ausführungsbeispiel beschränkt. Insbesondere sind auch einzelne Kombinationen von Merkmalen in vorteilhafter Weise möglich. Ferner wird darauf hingewiesen, dass die erläuterten Schemata der Fig. 2-4 lediglich der Illustration dienen.

## Patentansprüche

1. Verfahren zum Testen einer Zuweisung einer oder mehrerer Übertragungsfrequenzen (f_{zu}, f_{1zu}, f_{2zu}) aus einer Gesamtanzahl von Übertragungsfrequenzen durch eine Basisstation (3) mit folgenden Verfahrensschritten:
- Aufbauen einer Verbindung (4) zwischen einem Testgerät (2) und der Basisstation (3)
- Senden zumindest eines Datensignalabschnitts (31-34, 36, 37, 41-44, 46, 47, 51-54, 56, 57) auf zumindest einer zugewiesenen Übertragungsfrequenz (f_{zu}, f_{1zu}, f_{2zu}) mit einer Signalleistung und einer Phasenlage;
- Senden zumindest eines Testsignalabschnitts (35, 45, 55) auf zumindest einer nicht zugewiesenen Übertragungsfrequenz, wobei der jeweilige Testsignalabschnitt (35, 45, 55) für jeweils eine Übertragungsfrequenz oder ein Frequenzblock mit mehreren Übertragungsfrequenzen mit einer für jede Übertragungsfrequenz oder jeden Frequenzblock individuell eingestellten Sendeleistung und Phasenlage gesendet wird, die sich zumindest teilweise voneinander unterscheiden;
- Empfangen des Testsignalabschnitts oder der Testsignalabschnitte (35, 45, 55) mit der und/oder den nicht zugewiesenen Übertragungsfrequenzen;
- Auswerten der Signalleistungen und/oder der Phasenlagen für die Testsignalabschnitte (35, 45, 55) einzeln für die nicht zugewiesenen Übertragungsfrequenzen und/oder Frequenzblöcken und Auswerten der Signalleistung und/oder der Phasenlage der zugewiesenen Übertragungsfrequenz;
- Ermitteln einer zuzuweisenden Übertragungsfrequenz oder eines Frequenzblocks und Zurücksenden eines Zuweisungssignals; und
- Empfangen des Zuweisungssignals und Vergleichen mit einem Erwartungswert.

2. Verfahren nach Anspruch 1,
**dadurch gekennzeichnet,**
**dass** zum Senden ein Signal mit einer Rahmenstruktur erzeugt wird, wobei ein Rahmen mehrere aufeinanderfolgende Zeitschlitze (31-37, 41-47, 51-57) aufweist und zum Senden des Testsignalabschnitts (35, 45, 55) auf zumindest einer nicht zugewiesenen Übertragungsfrequenz jeweils derselbe Zeitschlitz (35, 45, 55) aufeinander folgender Rahmen (30, 40, 50) verwendet wird.

3. Verfahren nach Anspruch 1 oder 2,
**dadurch gekennzeichnet,**
**dass** jeweils mehrere Übertragungsfrequenzen zu einem Frequenzblock zusammengefasst werden und der Testsignalabschnitt (35, 45, 55) mehrere Frequenzblöcke umfasst.

4. Verfahren nach einem der Ansprüche 1 bis 3,
**dadurch gekennzeichnet,**
**dass** durch die Basisstation (3) weitere das Zuweisungssignal beeinflussende Parameter unterdrückt werden und damit das Zuweisungssignal nur auf Basis des von dem Testgerät (2) gesendeten Signals ermittelt wird.

5. Verfahren nach einem der Ansprüche 1 bis 4,
**dadurch gekennzeichnet,**
**dass** durch Variation der den Frequenzblöcken und/oder den Übertragungsfrequenzen des Testsignalabschnitts (35, 45, 55) individuell zugeordneten Signalleistungen und/oder der Phasenlagen für die Signalleistung und/oder die Phasenlage eine Grenzwert für eine Abweichung von der Signalleistung und/oder der Phasenlage der zugewiesenen Übertragungsfrequenz (f_{zu}, f_{1zu}, f_{2zu}) ermittelt wird, bei der durch das Zuweisungssignal ein Wechsel der zugewiesenen Übertragungsfrequenz (f_{zu}, f_{1zu,} f_{2zu}) erfolgt.

6. Verfahren nach Anspruch 5,
**dadurch gekennzeichnet,**
**dass** in aufeinanderfolgenden Testsignalabschnitten (35, 45, 55) für eine bestimmte Übertragungsfrequenz (f_{2zu}) oder einen bestimmten Frequenzblock die Signalleistung schrittweise erhöht wird, bis durch die Basisstation (3) diese bestimmte Übertragungsfrequenz (f_{2zu}) oder dieser bestimmte Frequenzblock zugewiesen wird.

7. Verfahren nach einem der Ansprüche 1 bis 6,
**dadurch gekennzeichnet,**
**dass** die zumindest eine nicht zugewiesene Übertragungsfrequenz und/oder der zumindest eine Frequenzblock aufeinanderfolgender Testsignalabschnitte eine im Vergleich zu dem vorangegangenen Testsignalabschnitt unterschiedliche Frequenzlage aufweist.

8. Verfahren nach Anspruch 7,
**dadurch gekennzeichnet,**
**dass** die Frequenzlage der nicht zugewiesenen Übertragungsfrequenzen und/oder Frequenzblöcken in aufeinanderfolgenden Testsignalabschnitten nach einem vorgegebenen Schema geändert wird.

9. Testgerät zum Testen einer Basisstation (3) mit einem Signalerzeugungsabschnitt (7) zum Erzeugen eines Signals mit zumindest einem Datensignalabschnitt und zumindest einem Testsignalabschnitt (35, 45, 55), wobei dem zumindest einen Datensignalabschnitt eine für eine Verbindung zu einer Basisstation (3) zugewiesene Übertragungsfrequenz (f_{zu}, f_{1zu}, f_{2zu}) und dem zumindest einen Testsignalabschnitt (35, 45, 55) zumindest eine nicht zugewiesene Übertragungsfrequenz zugeordnet ist, einer Sendeeinrichtung (8) zum Senden des Signals mit einer für jede Übertragungsfrequenz bzw. jeden Frequenzblock individuell eingestellten Signalleistung und/oder Phasenlage und einer Empfangseinrichtung (15) zum Empfangen eines Zuweisungssignals und mit einer Vergleichseinrichtung (17) zum Vergleichen des Inhalts des empfangenen Zuweisungssignals mit einem Erwartungswert.

10. Testgerät nach Anspruch 9,
**dadurch gekennzeichnet,**
**dass** in einem Speicher (18) des Testgeräts (2) zumindest ein Schema zur Auswahl der Übertragungsfrequenzen des Testsignalabschnitts (35, 45, 55) abgespeichert ist.

11. Testgerät nach Anspruch 9 oder 10,
**dadurch gekennzeichnet,**
**dass** eine Steuerungseinheit (19) vorgesehen ist, die so eingerichtet ist, dass dem Testsignal für die jeweilige Übertragungsfrequenz oder den Frequenzblock individuell eine Signalleistung und/oder eine Phasenlage zugeordnet wird.

## Claims

1. A method for testing an allocation by a base station (3) of one or more transmission frequencies (f_{zu}, f_{1zu}, f_{2zu}) from a total number of transmission frequencies, with the following method steps:
- setting up of a connection (4) between a test device (2) and the base station (3)
- transmission of at least one data signal portion (31-34, 36, 37, 41-44, 46, 47, 51-54, 56, 57) on at least one allocated transmission frequency (f_{zu}, f_{1zu}, f_{2zu}) with a signal power and a phase position;
- transmission of at least one test-signal portion (35, 45, 55) on at least one non-allocated transmission frequency, wherein the respective test-signal portion (35, 45, 55) is transmitted in each case for one transmission frequency or one frequency block with several transmission frequencies with a transmission power and phase position adjusted individually for each transmission frequency or each frequency block which differ at least partially from one another;
- reception of the test-signal portion or of the test-signal portions (35, 45, 55) with the non-allocated transmission frequency and/or frequencies;
- evaluation of the signal powers and/or the phase positions for the test-signal portions (35, 45, 55) individually for the non-allocated transmission frequencies and/or frequency blocks and evaluation of the signal power and/or the phase position of the allocated transmission frequency;
- determination of a transmission frequency or of a frequency block to be allocated, and transmitting back an allocation signal; and
- reception of the allocation signal and comparison with an anticipated value.

2. The method according to claim 1,
**characterised in that**
a signal with a frame structure is generated for the transmission, wherein one frame comprises several successive timeslots (31-37, 41-47, 51-57), and in each case, the same time slot (35, 45, 55) of successive frames (30, 40, 50) is used for the transmission of the test-signal portion (35, 45, 55) on at least one non-allocated transmission frequency.

3. The method according to claim 1 or 2,
**characterised in that**,
in each case, several transmission frequencies are combined to form a frequency block, and the test-signal portion (35, 45, 55) comprises several frequency blocks.

4. The method according to any one of claims 1 to 3,
**characterised in that**
further parameters influencing the allocation signal are suppressed by the base station (3), and accordingly, the allocation signal is determined only on the basis of the signal transmitted by the test device (2).

5. The method according to any one of claims 1 to 4,
**characterised in that**
by varying the signal powers and/or the phase positions allocated individually to the frequency blocks and/or to the transmission frequencies of the test-signal portion (35, 45, 55), a threshold value for a deviation from the signal power and/or the phase position of the allocated transmission frequency (f_{zu}, f_{1zu}, f_{2zu}) at which a change of the allocated transmission frequency (f_{zu}, f_{1zu}, f_{2zu}) is implemented by the allocation signal is determined for the signal power and/or the phase position.

6. The method according to claim 5,
**characterised in that**,
for a given transmission frequency (f_{2zu}) or a given frequency block, the signal power is increased stepwise in successive test-signal portions (35, 45, 55), until this given transmission frequency (f_{2zu}) or this given frequency block is allocated by the base station (3).

7. The method according to any one of claims 1 to 6,
**characterised in that**
the at least one non-allocated transmission frequency and/or the at least one frequency block of successive test-signal portions provides a different frequency position by comparison with the preceding test-signal portion.

8. The method according to claim 7,
**characterised in that**
the frequency position of the non-allocated transmission frequencies and/or frequency blocks is varied in successive test-signal portions according to a predetermined pattern.

9. A test device for testing a base station (3) with a signal-generating portion (7) for generating a signal with at least one data-signal portion and at least one test-signal portion (35, 45, 55), wherein a transmission frequency (f_{zu}, f_{1zu}, f_{2zu}) allocated for a connection to a base station (3) is allocated to the at least one data-signal portion, and at least one non-allocated transmission frequency is allocate ed to the at least one test-signal portion (35, 45, 55),
a transmission device (8) for the transmission of the signal with a signal power and/or phase position individually adjusted for every transmission frequency or every frequency block, and a reception device (15) for the reception of an allocation signal,
and with a comparison device (17) for comparing the content of the received allocation signal with an anticipated value.

10. The test device according to claim 9,
**characterised in that**
at least one pattern for the selection of the transmission frequencies of the test-signal portion (35, 45, 55) is stored in a memory (18) of the test device (2).

11. The test device according to claim 9 or 10,
**characterised in that**
a control unit (19) is provided, which is set up in such a manner that a signal power and/or a phase position is allocated individually to the test signal for the respective transmission frequency or the frequency block.

## Revendications

1. Procédé pour tester une attribution d'une ou de plusieurs fréquences de transmission (f_{zu}, f_{1zu}, f_{2zu}) d'un nombre total de fréquences de transmission par une station de base (3) avec les étapes de procédé suivantes:
- établissement d'une liaison (4) entre un appareil de test (2) et la station de base (3)
- émission d'au moins un segment de signal de données (31-34, 36, 37, 41-44, 46, 47, 51-54, 56, 57) sur au moins une fréquence de transmission attribuée (f_{zu}, f_{1zu}, f_{2zu}) avec une puissance de signal et une position de phase;
- émission d'au moins un segment de signal de test (35, 45, 55) sur au moins une fréquence de transmission non-attribuée, où le segment de signal de test respectif (35, 45, 55) pour respectivement une fréquence de transmission ou un bloc de fréquences avec plusieurs fréquences de transmission est émis avec une puissance d'émission et position de phase réglées individuellement pour chaque fréquence de transmission ou chaque bloc de fréquences, qui se distinguent au moins partiellement l'une de l'autre;
- réception du segment de signal de test ou des segments de signal de test (35, 45, 55) avec la et/ou les fréquences de transmission non attribuées;
- évaluation des puissances de signal et/ou des positions de phase pour les segments de signal de test (35, 45, 55) individuellement pour les fréquences de transmission et/ou blocs de fréquences non attribués, et évaluation de la puissance de signal et/ou de la position de phase de la fréquence de transmission attribuée;
- détermination d'une fréquence de transmission ou d'un bloc de fréquences à attribuer et renvoi d'un signal d'attribution; et
- réception du signal d'attribution et comparaison avec une valeur attendue.

2. Procédé selon la revendication 1,
**caractérisé en ce que**
pour l'émission, un signal avec une structure de trame est produit, où une trame présente plusieurs intervalles de temps successifs (31-37, 41-47, 51-57), et pour l'émission du segment de signal de test (35, 45, 55) sur au moins une fréquence de transmission non attribuée, respectivement le même intervalle de temps (35, 45, 55) de trames successives (30, 40, 50) est utilisé.

3. Procédé selon la revendication 1 ou 2,
**caractérisé en ce qu'**
à chaque fois plusieurs fréquences de transmission sont réunies en un bloc de fréquences, et le segment de signal de test (35, 45, 55) comprend plusieurs blocs de fréquences.

4. Procédé selon l'une des revendications 1 à 3,
**caractérisé en ce que**
par la station de base (3), d'autres paramètres agissant sur le signal d'attribution sont supprimés et de ce fait le signal d'attribution est déterminé seulement sur la base du signal émis par l'appareil de test (2).

5. Procédé selon l'une des revendications 1 à 4,
**caractérisé en ce que**
par la variation des puissances de signal associées individuellement aux blocs de fréquences et/ou aux fréquences de transmission du segment de signal de test (35, 45, 55) et/ou des positions de phase pour la puissance de signal et/ou la position de phase, une valeur limite pour un écart de la puissance de signal et/ou de la position de phase de la fréquence de transmission attribuée (f_{zu}, f_{1zu}, f_{2zu}) est déterminée, à laquelle a lieu par le signal d'attribution un changement de la fréquence de transmission attribuée (f_{zu}, f_{1zu}, f_{2zu}).

6. Procédé selon la revendication 5,
**caractérisé en ce que**
dans des segments de signal de test successifs (35, 45, 55) pour une fréquence de transmission déterminée (f_{2zu}) ou un bloc de fréquences déterminé, la puissance de signal est augmentée pas à pas jusqu'à ce que, par la station de base (3), cette fréquence de transmission déterminée (f_{2zu}) ou ce bloc de fréquences déterminé est attribué.

7. Procédé selon l'une des revendications 1 à 6,
**caractérisé en ce que**
la au moins une fréquence de transmission non attribuée et/ou le au moins un bloc de fréquences de segments de signaux de test successifs présentent une position de fréquence différente en comparaison avec le segment de signal de test précédent.

8. Procédé selon la revendication 7,
**caractérisé en ce que**
la position de fréquence des fréquences de transmission et/ou blocs de fréquences non attribués dans des segments de signaux de test successifs est modifiée selon un schéma prédéterminé.

9. Appareil de test pour tester une station de base (3) avec un segment de production de signal (7) pour produire un signal avec au moins un segment de signal de données et au moins un segment de signal de test (35, 45, 55), où est associé à au moins un segment de signal de données une fréquence de transmission (f_{zu}, f_{1zu}, f_{2zu}) associée à au moins un segment de signal de données pour une liaison avec une station de base (3) et à au moins un segment de signal de test (35, 45, 55) au moins une fréquence de transmission non attribuée, une installation d'émission (8) pour l'émission du signal avec une puissance de signal et/ou position de phase réglée individuellement pour chaque fréquence de transmission respectivement chaque bloc de fréquences et une installation de réception (15) pour la réception d'un signal d'attribution et avec une installation de comparaison (17) pour comparer le contenu du signal d'attribution reçu avec une valeur attendue.

10. Appareil de test selon la revendication 9,
**caractérisé en ce que**
dans une mémoire (18) de l'appareil de test (2), au moins un schéma pour la sélection des fréquences de transmission du segment de signal de test (35, 45, 55) est stocké.

11. Appareil de test selon la revendication 9 ou 10,
**caractérisé en ce qu'**
une unité de commande (19) est prévue qui est installée de façon que soit attribué au signal de test pour la fréquence de transmission respective ou le bloc de fréquences individuellement une puissance de signal et/ou une position de phase.
